# EUROPÄISCHE PATENTSCHRIFT

(11) **EP 2 504 905 B1**
(45) Veröffentlichungstag und Bekanntmachung des Hinweises auf die Patenterteilung: **25.12.2013**
(21) Anmeldenummer: 10768744.4
(22) Anmeldetag: 14.10.2010
(51) Int. Cl.: H02K 5/08, H02K 7/116, B60S 1/16

(54) **ANTRIEBSEINHEIT UND SCHEIBENWISCHERANTRIEB MIT EINER ANTRIEBSEINHEIT**
DRIVE UNIT AND WINDSHIELD WIPER DRIVE COMPRISING A DRIVE UNIT
UNITÉ D'ENTRAÎNEMENT ET MÉCANISME D'ENTRAÎNEMENT D'ESSUIE-GLACE DOTÉ D'UNE UNITÉ D'ENTRAÎNEMENT

(30) Priorität: 25.11.2009 DE 102009047129
(43) Veröffentlichungstag der Anmeldung: 03.10.2012
(73) Patentinhaber: Robert Bosch GmbH, 70469 Stuttgart (DE)
(72) Erfinder: KASTINGER, Guenter, 76571 Gaggenau-Sulzbach (DE); HUESGES, Mario, 77830 Buehlertal (DE); OBERT, Mike, 76593 Gernsbach (DE); LAUK, Detlef, 77871 Renchen (DE); RIEDINGER, Klaus, 76571 Gaggenau (DE)
(86) Internationale Anmeldenummer: PCT/EP2010/065384
(87) Internationale Veröffentlichungsnummer: WO 2011/064036

(56) Entgegenhaltungen:
- DE-C- 707 303
- FR-A1- 2 276 720
- GB-A- 593 857

## Beschreibung

### Stand der Technik

Die Erfindung betrifft eine Antriebseinheit nach dem Oberbegriff des Anspruchs 1.

Eine derartige Antriebseinheit ist bereits allgemein bekannt, und wird insbesondere als Bestandteil einer Antriebseinrichtung eingesetzt. Hierbei ist ein zum Antrieb dienender Elektromotor in einem Gehäuse aufgenommen, das aus zwei schalenförmigen, im Tiefziehverfahren hergestellten Blechschalen besteht. Die beiden Blechschalen sind miteinander verbunden. Ein derartiges Gehäuse hat den Vorteil, dass es bei geringem Gewicht relativ einfach und kostengünstig herstellbar ist. Nachteilig dabei ist, dass manche Komponenten in dem Gehäuse eine stabile Lagerung erfordern, welche bei den verwendeten, relativ geringen Blechstärken zu Problemen führt. Daher müssen die bekannten Gehäuse mit relativ großen Blechstärken ausgebildet werden, wobei sich die Blechstärke an der Beanspruchung des kritischsten Bauteils orientiert, was sich sowohl auf das Gewicht als auch auf die Materialkosten des Gehäuses nachteilig auswirkt.

Aus der DE 707 303 ist eine elektrische Maschine mit einer topfartig ausgebildeten Lagerbuchse bekannt, wobei das Blechlagerschild zusätzlich versteift ist. Die Lagerbuchsen sind über ein Ständerblechpaket der elektrischen Maschine gestülpt und daran befestigt.

### Offenbarung der Erfindung

Ausgehend von dem dargestellten Stand der Technik liegt der Erfindung die Aufgabe zugrunde, eine Antriebseinheit nach dem Oberbegriff des Anspruchs 1 derart weiterzubilden, dass sie bei möglichst geringem Gewicht eine besonders hohe mechanische Stabilität aufweist. Diese Aufgabe wird bei einer Antriebseinheit mit den Merkmalen des Anspruchs 1 gelöst. Der Erfindung liegt dabei die Idee zugrunde, durch ein mit der Gehäuseschale verbundenes Verstärkungselement die Gehäuseschale in dem Bereich zu verstärken, in dem die Gehäuseschale besonders hohen mechanischen Belastungen ausgesetzt ist. Dadurch kann, obwohl eine relativ geringe Blechstärke für die Gehäuseschale verwendet wird, ein niedriges Gewicht erzielt werden, ohne, dass hierdurch die Festigkeitseigenschaften des Gehäuses leiden.

Vorteilhafte Weiterbildungen der erfindungsgemäßen Antriebseinheit sind in den Unteransprüchen angeben. In den Rahmen der Erfindung fallen sämtliche Kombinationen aus zumindest zwei von in den Ansprüchen, der Beschreibung und/oder den Figuren offenbarten Merkmalen.

In einer besonders bevorzugten konstruktiven Ausgestaltung der Erfindung ist es vorgesehen, dass das Verstärkungselement als tiefgezogenes Blechteil ausgebildet ist. Dadurch kann das Verstärkungselement selbst relativ einfach und preiswert, bei gleichzeitig geringem Gewicht und hoher Festigkeit hergestellt werden.

Eine hinreichend stabile und fertigungstechnisch einfache Verbindung zwischen dem Verstärkungselement und der Gehäuseschale wird ausgebildet, wenn das Verstärkungselement durch eine Schweißverbindung, insbesondere durch wenigstens eine Punktschweißverbindung, mit der Gehäuseschale verbunden ist.

Besonders bevorzugt ist es ebenfalls, dass das Verstärkungselement einen Aufnahmebereich für ein mit dem Antriebsmotor gekoppeltes Getriebeelement aufweist. Dadurch dient das Verstärkungselement gleichzeitig einem anderen Zweck, so dass die Gehäuseschale unabhängig von der Lagerung des Getriebeelementes ausgebildet werden kann, um gegebenenfalls besonders gute Festigkeitswerte oder eine besondere geometrische Gestalt annehmen zu können.

Eine besonders hohe Stabilität der Verbindung bei einem derartigen, einen Aufnahmebereich aufweisenden Verstärkungselement mit der Gehäuseschale lässt sich erzielen, wenn der Aufnahmebereich zumindest teilweise hülsenförmig ausgebildet ist und, wenn der Aufnahmebereich durch Formschluss in der Gehäuseschale aufgenommen ist. Dadurch ist es auch nicht erforderlich den hülsenförmigen Abschnitt zusätzlich z.B. durch eine Schweißverbindung mit der Gehäuseschale zu verbinden.

Besonders hohe Steifigkeiten bzw. Festigkeiten des Gehäuses lassen sich darüber hinaus erzielen, wenn zwischen der Gehäuseschale und dem Verstärkungselement im Überdeckungsbereich mit dem Verstärkungselement wenigstens ein kammerartiger Hohlraum ausgebildet ist.

Um einerseits die Gehäuseschale im Überdeckungsbereich mit dem Verstärkungselement möglichst einfach herstellen zu können, sowie andererseits durch die Gestaltung der Gehäuseschale selbst bereits eine besonders hohe Festigkeit zu erzielen, ist es in einer weiteren vorteilhaften konstruktiven Ausgestaltung der Erfindung vorgesehen, dass die Gehäuseschale im Überdeckungsbereich mit dem Verstärkungselement wenigstens eine Stufe aufweist.

Der soweit durch das Verstärkungselement versteifte Bereich der Gehäuseschale lässt sich vorteilhafterweise zur Befestigung der Antriebseinheit verwenden, indem im Überdeckungsbereich zwischen der Gehäuseschale und dem Verstärkungselement auf der dem Verstärkungselement abgewandten Seite der Gehäuseschale wenigstens ein Befestigungselement zur zumindest mittelbaren Ankopplung der Antriebseinheit an das zu bewegende Element angeordnet ist.

Besonders bevorzugt wird hierbei das Befestigungselement durch eine Schweißverbindung mit der Gehäuseschale verbunden. Eine derartige Schweißverbindung sorgt durch die Gefügeänderung durch eine zusätzliche Verstärkung bzw. Stabilisierung des Befestigungsbereiches und ist wirtschaftlich besonders günstig herstellbar.

Die Erfindung umfasst auch einen Scheibenwischerantrieb in einem Kraftfahrzeug mit einer erfindungsgemäßen Antriebseinheit. Ein derartiger Scheibenwischerantrieb hat den Vorteil eines relativ preiswerten Aufbaus bei besonders günstigem Gewicht, welches als eine der Hauptanforderungen in einem Kraftfahrzeug zu günstigen Kraftstoffverbräuchen sowie guten Fahrleistungen beiträgt.

Weitere Vorteile der Erfindung ergeben sich aus der nachfolgenden Beschreibung bevorzugter Ausführungsbeispiele sowie anhand der Zeichnungen.

Diese zeigen in:
- Fig. 1: eine perspektivische Außenansicht auf einen Teil einer erfindungsgemäßen Antriebseinheit,
- Fig. 2: eine perspektivische Ansicht auf die Innenseite einer Gehäuseschale mit einem tiefgezogenen Verstärkungselement und
- Fig. 3: einen Teillängsschnitt durch die Antriebseinheit gemäß der Fig. 1 im Bereich des Verstärkungselements.

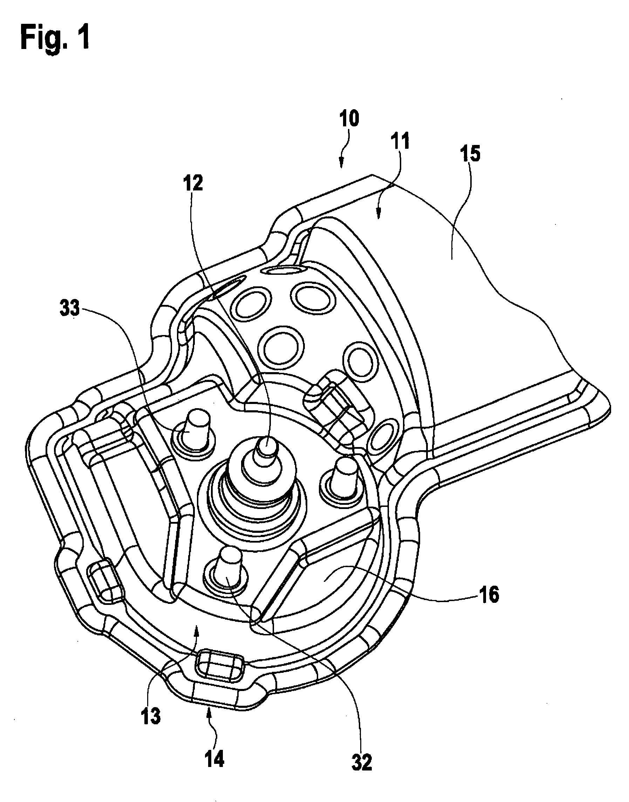

In den Fig. 1 bis 3 ist eine erfindungsgemäße Antriebseinheit 10 dargestellt. Die Antriebseinheit 10 ist hierbei insbesondere Bestandteil eines Scheibenwischerantriebs in einem Kraftfahrzeug, wobei die im Übrigen nicht dargestellte Wischeranlage mittels einer aus einem Gehäuse 11 der Antriebseinheit 10 herausragenden Abtriebswelle 12 zumindest mittelbar angetrieben wird.

Das Gehäuse 11 besteht im Ausführungsbeispiel insbesondere aus zwei, aus Blech bestehenden und im Tiefziehverfahren hergestellten Gehäusehalbschalen 13, 14, wobei in den Figuren lediglich die eine, obere Gehäuseschale 13 näher dargestellt ist.

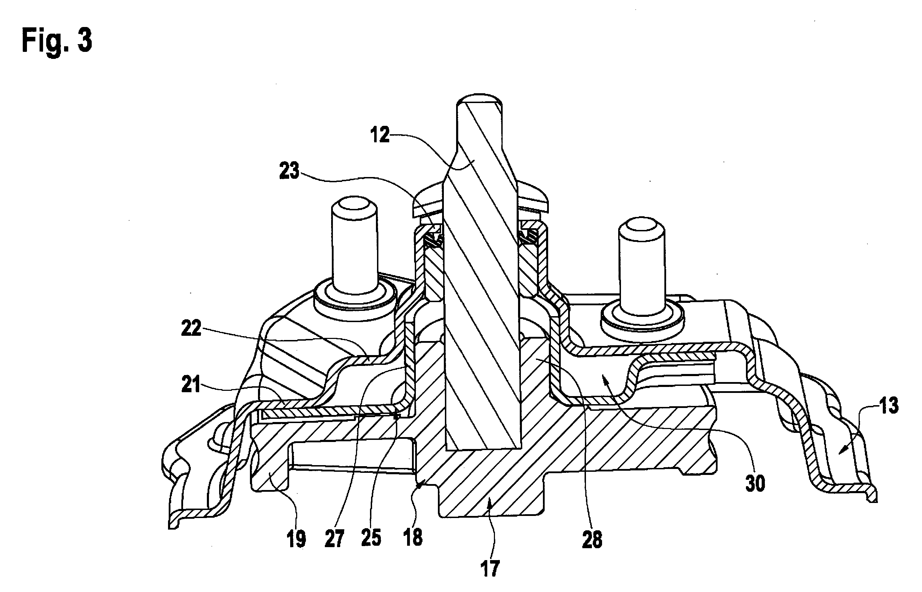

Wie man insbesondere anhand der Fig. 1 erkennt, weisen die beiden Gehäuseschalen 13 und 14 einen Bereich 15 zur Aufnahme eines nicht dargestellten Antriebsmotors, insbesondere eines Elektromotors auf. An den Bereich 15 schließt sich ein weiterer Bereich 16 an, der insbesondere zur Aufnahme eines Getriebes 17 dient, wie dies insbesondere anhand der Fig. 3 erkennbar ist. Das Getriebe 17 umfasst unter anderem ein Schneckenrad 18, das über eine am Außenumfang des Schneckenrades 18 ausgebildete, nicht näher dargestellte Außenverzahnung 19 mit einem Abtriebsritzel des Elektromotors gekoppelt ist. In dem Schneckenrad 18 ist ferner die Abtriebswelle 12 fest eingepasst, z.B. durch eine Formschlussverbindung in Form einer Kunststoffumspritzung.

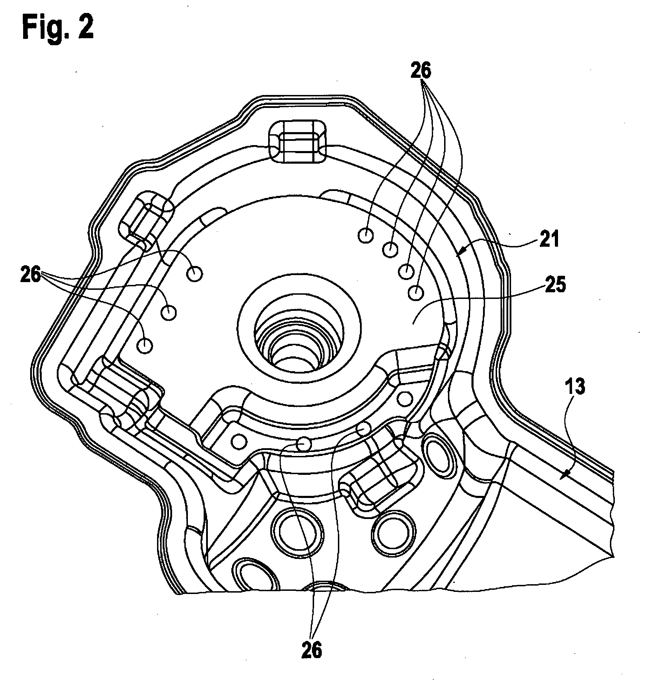

Die Gehäuseschale 13 weist im Bereich des Getriebes 17 im Querschnitt eine mehrfach gestufte Form mit beispielhaft drei horizontalen Stufen 21 bis 23 auf (siehe Fig. 3). Wie man insbesondere anhand der Fig. 2 erkennt, ist an der Innenseite 24 der Gehäuseschale 13 ein Verstärkungselement 25 angeordnet.

Das Verstärkungselement 25 ist hierbei bevorzugt ebenfalls aus Blech hergestellt und als Tiefziehteil ausgebildet. Die Verbindung zwischen der Gehäuseschale 13 und dem Verstärkungselement 25 erfolgt im Ausführungsbeispiel über mehrere, am äußeren Rand des Verstärkungselements 25 angeordnete Punktschweißverbindungen 26. Ergänzend wird erwähnt, dass anstelle von Punktschweißverbindungen selbstverständlich auch andersartige Verbindungen verwendet werden können, beispielsweise durchgehende Schweißnähte oder eine Klebeverbindung.

Wie man insbesondere anhand der Fig. 3 erkennt, weist das Verstärkungselement 25 einen hülsenartigen Aufnahmeabschnitt 27 zur Aufnahme eines Achsstummels 28 des Schneckenrades 18 auf. Hierbei nimmt der Aufnahmeabschnitt 27 den Achsstummel 28 nahezu formschlüssig auf, so dass der Aufnahmeabschnitt 27 gleichzeitig zur Lagerung des Schneckenrades 18 bzw. der Abtriebswelle 12 dient. Der Aufnahmeabschnitt 27 ist bevorzugt in einem ebenfalls hülsenförmigen Abschnitt 29 der Gehäuseschale 13 eingepasst bzw. eingepresst, so dass die Verbindung zwischen dem Verstärkungselement 25 und der Gehäuseschale 13 einerseits über die Punktschweißverbindungen 26 und andererseits über die Pressverbindung zwischen dem Aufnahmeabschnitt 27 und dem hülsenförmigen Abschnitt 29 erfolgt. Ferner erkennt man insbesondere anhand der Fig. 3, dass zwischen dem Verstärkungselement 25 und der Gehäuseschale 13 eine ringförmige Hohlkammer 30 ausgebildet ist. Hierbei befindet sich die Hohlkammer 30 zwischen dem Randbereich des Verstärkungselements 25 mit den Punktschweißverbindungen 26 und dem Aufnahmeabschnitt 27, welcher in den hülsenförmigen Abschnitt 29 eingepresst und somit starr mit diesem verbunden ist.

Bevorzugt ist vorgesehen, dass im Überdeckungsbereich des Verstärkungselements 25 mit der Gehäuseschale 13 auf der dem Verstärkungselement 25 abgewandten Seite der Gehäuseschale 13 mehrere Befestigungselemente 32, z.B. in Form von Stehbolzen 33, an dem Gehäuse 11 angeordnet sind. Hierbei erfolgt die Verbindung der Stehbolzen 33 an dem Gehäuse 11 bevorzugt durch Punktschweißverbindungen. Die Stehbolzen 33 dienen hierbei der Ankopplung der Antriebseinheit 10 an dem im Übrigen nicht näher dargestellten Wischerantrieb.

Die soweit beschriebene Antriebseinheit 10 kann in vielfältiger Art und Weise modifiziert bzw. abgewandelt werden, ohne vom Erfindungsgedanken abzuweichen. So ist es beispielsweise insbesondere denkbar, für das Verstärkungselement 25 eine andere Blechdicke als für die Gehäuseschalen 13 und 14 vorzusehen. Ferner kann das Verstärkungselement 25 auch z.B. als einfache Platte, d.h. nicht als tiefgezogenes Blechteil ausgebildet sein. Erfindungswesentlich ist lediglich die feste Anbindung eines Verstärkungselementes 25 an eine Gehäuseschale 13, 14 zur Versteifung der Gehäuseschale 13, 14.

## Patentansprüche

1. Antriebseinheit (10), mit einem Gehäuse (11) für einen Antriebsmotor, der über eine Abtriebswelle (12) mit einem zu bewegenden Element zusammenwirkt, wobei das Gehäuse (11) wenigstens eine aus Blech, insbesondere in einem Tiefziehverfahren hergestellte Gehäuseschale (13, 14) aufweist, wobei, dass in dem Innenraum (24) wenigstens einer Gehäuseschale (13, 14) ein Verstärkungselement (25) angeordnet und mit der wenigstens einen Gehäuseschale (13, 14) verbunden ist, **dadurch gekennzeichnet, dass** das Verstärkungselement (25) einen Aufnahmebereich (27) für ein mit dem Antriebsmotor gekoppeltes Getriebeelement (18) aufweist.

2. Antriebseinheit nach Anspruch 1,
**dadurch gekennzeichnet,**
**dass** das Verstärkungselement (25) als tiefgezogenes Blechteil ausgebildet ist.

3. Antriebseinheit nach Anspruch 1 oder 2,
**dadurch gekennzeichnet,**
**dass** das Verstärkungselement (25) durch eine Schweißverbindung, insbesondere durch wenigstens eine Punktschweißverbindung (26), mit der Gehäuseschale (13) verbunden ist.

4. Antriebseinheit nach einem der Ansprüche 1 bis 3,
**dadurch gekennzeichnet,**
**dass** der Aufnahmebereich (27) zumindest teilweise hülsenförmig ausgebildet ist und, dass der Aufnahmebereich (27) durch Formschluss in der Gehäuseschale (13) aufgenommen ist.

5. Antriebseinheit nach einem der Ansprüche 1 bis 4,
**dadurch gekennzeichnet,**
**dass** zwischen der Gehäuseschale (13) und dem Verstärkungselement (25) im Überdeckungsbereich mit dem Verstärkungselement (25) wenigstens ein kammerartiger Hohlraum (30) ausgebildet ist.

6. Antriebseinheit nach einem der Ansprüche 1 bis 5,
**dadurch gekennzeichnet,**
**dass** die Gehäuseschale (13) im Überdeckungsbereich mit dem Verstärkungselement (25) wenigstens eine Stufe (21 bis 23) aufweist.

7. Antriebseinheit nach einem der Ansprüche 1 bis 6,
**dadurch gekennzeichnet,**
**dass** im Überdeckungsbereich zwischen der Gehäuseschale (13) und dem Verstärkungselement (25) auf der dem Verstärkungselement (25) abgewandten Seite der Gehäuseschale (13) wenigstens ein Befestigungselement (32) zur zumindest mittelbaren Ankopplung der Antriebseinheit (10) an das zu bewegende Element angeordnet ist.

8. Antriebseinheit nach Anspruch 7,
**dadurch gekennzeichnet,**
**dass** das Befestigungselement (32) durch eine Schweißverbindung mit der Gehäuseschale (13) verbunden ist.

9. Scheibenwischerantrieb in einem Kraftfahrzeug mit einer Antriebseinheit (10) nach einem der Ansprüche 1 bis 8.

## Claims

1. Drive unit (10), with a housing (11) for a drive motor which interacts via an output shaft (12) with an element which is to be moved, wherein the housing (11) has at least one housing shell (13, 14) produced from sheet metal, in particular by deep drawing, wherein a reinforcing element (25) is arranged in the interior (24) of at least one housing shell (13, 14) and is connected to the at least one housing shell (13, 14), **characterized in that** the reinforcing element (25) has a receiving region (27) for a gearing element (18) coupled to the drive motor.

2. Drive unit according to Claim 1, **characterized in that** the reinforcing element (25) is designed as a deep-drawn sheet-metal part.

3. Drive unit according to Claim 1 or 2, **characterized in that** the reinforcing element (25) is connected to the housing shell (13) by a weld, in particular by at least one spot weld (26).

4. Drive unit according to one of Claims 1 to 3, **characterized in that** the receiving region (27) is of at least partially sleeve-shaped design, and **in that** the receiving region (27) is accommodated in the housing shell (13) by a positive connection.

5. Drive unit according to one of Claims 1 to 4, **characterized in that** at least one chamber-like cavity (30) is formed between the housing shell (13) and the reinforcing element (25) in the region of overlap with the reinforcing element (25).

6. Drive unit according to one of Claims 1 to 5, **characterized in that** the housing shell (13) has at least one step (21 to 23) in the region of overlap with the reinforcing element (25).

7. Drive unit according to one of Claims 1 to 6, **characterized in that** at least one fastening element (32) for at least indirectly coupling the drive unit (10) to the element which is to be moved is arranged in the region of overlap between the housing shell (13) and the reinforcing element (25) on that side of the housing shell (13) which faces away from the reinforcing element (25).

8. Drive unit according to Claim 7, **characterized in that** the fastening element (32) is connected to the housing shell (13) by a weld.

9. Windscreen wiper drive in a motor vehicle with a drive unit (10) according to one of Claims 1 to 8.

## Revendications

1. Unité d'entraînement (10) comprenant un boîtier (11) pour un moteur d'entraînement qui coopère avec un élément à déplacer par le biais d'un arbre de sortie (12), le boîtier (11) présentant au moins une coque de boîtier (13, 14) fabriquée en tôle, en particulier par un procédé d'emboutissage profond, un élément de renforcement (25) étant disposé dans l'espace interne (24) d'au moins une coque de boîtier (13, 14) et étant connecté à l'au moins une coque de boîtier (13, 14), **caractérisée en ce que** l'élément de renforcement (25) présente une région de réception (27) pour un élément de transmission (18) accouplé au moteur d'entraînement.

2. Unité d'entraînement selon la revendication 1,
**caractérisée en ce que**
l'élément de renforcement (25) est réalisé sous forme de pièce en tôle emboutie.

3. Unité d'entraînement selon la revendication 1 ou 2,
**caractérisée en ce que**
l'élément de renforcement (25) est connecté par le biais d'une connexion par soudage, en particulier par au moins une connexion par soudage par point (26), à la coque de boîtier (13).

4. Unité d'entraînement selon l'une quelconque des revendications 1 à 3,
**caractérisée en ce que**
la région de réception (27) est réalisée au moins en partie en forme de douille et la région de réception (27) est reçue par engagement par correspondance de forme dans la coque de boîtier (13).

5. Unité d'entraînement selon l'une quelconque des revendications 1 à 4,
**caractérisée en ce**
**qu'**entre la coque de boîtier (13) et l'élément de renforcement (25) est réalisée au moins une cavité (30) de type chambre dans la région en coïncidence avec l'élément de renforcement (25).

6. Unité d'entraînement selon l'une quelconque des revendications 1 à 5,
**caractérisée en ce que**
la coque de boîtier (13) présente au moins un étage (21 à 23) dans la région en coïncidence avec l'élément de renforcement (25).

7. Unité d'entraînement selon l'une quelconque des revendications 1 à 6,
**caractérisée en ce que**
dans la région de coïncidence entre la coque de boîtier (13) et l'élément de renforcement (25), du côté de la coque de boîtier (13) opposé à l'élément de renforcement (25), est disposé au moins un élément de fixation (32) pour le raccordement au moins indirect de l'unité d'entraînement (10) à l'élément à déplacer.

8. Unité d'entraînement selon la revendication 7,
**caractérisée en ce que**
l'élément de fixation (32) est connecté par une connexion par soudage à la coque de boîtier (13).

9. Entraînement d'essuie-glace dans un véhicule automobile comprenant une unité d'entraînement (10) selon l'une quelconque des revendications 1 à 8.
